# EUROPÄISCHE PATENTANMELDUNG

(11) **EP 4 775 648 A1**
(43) Veröffentlichungstag der Anmeldung: **15.07.2026**
(21) Anmeldenummer: 25150974.1
(22) Anmeldetag: 09.01.2025
(51) Int. Cl.: C10G 1/00, C08L 91/06, C10B 53/07, C10G 1/10, C10G 3/00, C11C 1/00, C10G 21/12, C10G 53/04, C10G 53/06

(54) **VERFAHREN ZUR HERSTELLUNG EINES FESTEN, WACHSARTIGEN KOHLENWASSERSTOFFGEMISCHES AUF BASIS VON RECYCELTEN KUNSTSTOFFEN**

(71) Anmelder: Hansen & Rosenthal GmbH & Co. KG, 20457 Hamburg (DE)
(72) Erfinder: HENTSCHEL, Lukas, 21107 Hamburg (DE); SCHMITZ, Daniel, 20457 Hamburg (DE); HEUER, Björn, 20457 Hamburg (DE)
(74) Vertreter: Bardehle Pagenberg Partnerschaft mbB Patentanwälte Rechtsanwälte

(57) **Zusammenfassung**

Gegenstand der Erfindung ist ein Verfahren zur Herstellung eines festen, wachsartigen Kohlenwasserstoffgemisches aus Kunststoffabfällen umfassend mindestens die Schritte Destillation eines Kunststoffpyrolyse-Produkts, das durch Pyrolyse von Kunststoffabfällen mit hohem Polyolefinanteil erhalten wurde, wobei eine Pyrolyseöl-Schwerfraktion im Siedebereich von > 320°C gewonnen wird und eine Lösungsmittelextraktion der hochsiedende Fraktion sowie eine Entparaffinierung des Raffinats durchgeführt wird.. Unraffinierte Wachse aus Kunststoffabfällen können nicht die gleichen Eigenschaften hinsichtlich der Produktqualitäten, wie Farbe, Stabilität, Nadelpenetration und Reinheit bezogen auf den Gehalt an polycyclischen aromatischen Kohlenwasserstoffen (PAK) erreichen wie das erfindungsgemäße feste wachsartige Kohlenwasserstoffgemisch.

## Beschreibung

Gegenstand der Erfindung ist ein Verfahren zur Herstellung eines festen, wachsartigen Kohlenwasserstoffgemisches aus Kunststoffabfällen umfassend mindestens die Schritte Destillation in einem oder mehreren Schritten eines Kunststoffpyrolyse-Produkts, das durch Pyrolyse von Kunststoffabfällen mit hohem Polyolefinanteil erhalten wurde, wobei eine hochsiedende Fraktion im Siedebereich von > 320°C abgetrennt wird und Lösungsmittelextraktion der hochsiedenden Fraktion. Weiterhin ist Gegenstand der Erfindung ein festes, wachsartiges Kohlenwasserstoffgemisch.

Der Verbrauch von Kunststoffen und die Kunststoffabfallentsorgung stellen weltweit und in Europa eine große Herausforderung für die Umwelt dar. Die weltweite Kunststoffproduktion ist sprunghaft angestiegen und hat im Jahr 2022 400 Millionen Tonnen erreicht (Statista), von denen nur 9 % recycelt und 12 % verbrannt werden. Die restlichen 79 % landen auf Mülldeponien oder in der Umwelt (Europäische Umweltagentur).

Die tatsächliche Recyclingquote für Kunststoffe in Europa liegt bei nur etwa 15 %, die restlichen 85 % werden entweder deponiert (30 %) oder verbrannt (54 %). Diese niedrige Recyclingquote führt zu erheblichen wirtschaftlichen und ökologischen Verlusten, da 95 % des Wertes von Kunststoffverpackungen nach einmaligem Gebrauch verloren gehen.

Chemische Recyclingtechnologien wie die Pyrolyse bieten eine Lösung für Kunststoffabfälle, die nicht mechanisch recycelt werden können. Bei der Pyrolyse werden gemischte Kunststoffabfälle in Kunststoff-Pyrolyseöl (PPO) umgewandelt, das als Brennstoff oder als Ausgangsmaterial für die Herstellung hochwertiger Recyclingprodukte verwendet werden kann, wodurch die Abhängigkeit von fossilen Brennstoffen verringert und die Verbrennung von Abfällen vermieden wird.

Typische Pyrolyseöle aus polyolefinischen Abfällen enthalten ein breites Spektrum an Kohlenwasserstoffen, darunter eine Naphtha-Fraktion bis hin zu hochsiedenden Wachskomponenten. Die leichteren Fraktionen sind ein geeignetes Ausgangsmaterial für das Steamcracken zur Herstellung neuer Kunststoffe. Die schwere Fraktion des Pyrolyseöls eignet sich nicht für die direkte Verwendung in einem Steamcracker und müsste z. B. durch Hydrocracken verwertbar gemacht werden, was sehr energieintensiv ist. Diese schwere Fraktion ist zudem stark mit Verunreinigungen wie Halogenen, Oxygenaten, reaktiven Komponenten wie Dienen, Metallen, Stickstoffverbindungen und krebserregenden polyzyklischen aromatischen Komponenten belastet. Daher kann sie nicht als Endprodukt verwendet werden und wird meist entsorgt oder zur weiteren Nutzung chemisch verändert.

Aus der US 2023/0048572 A1 ist die Pyrolyse von Kunststoffabfällen bekannt. Das Pyrolyseöle wird nach der Pyrolyse einer Isomerisierungsreaktion unterzogen, um ein Basisöl zu erzeugen. Das Pyrolyseöle wird somit chemisch hinsichtlich der Kettenlänge und der Verzweigung verändert. Hauptprodukt des Verfahrens ist ein flüssiges Basisöl.

Aufgabe der Erfindung ist es ein Verfahren zur Nutzung des Pyrolyseöls aus Kunststoffabfällen bereit zu stellen, dass die vorstehenden Nachteile überwindet und dass die Erzeugung hochwertiges Recyclingprodukte erlaubt und einen hohen Anteil wiederverwertbarer Produkte erzeugt.

Die Aufgabe wird erfindungsgemäß gelöst durch ein Verfahren zur Herstellung eines festen, wachsartigen Kohlenwasserstoffgemisches gemäß Patentanspruch 1. Weiterhin ist Gegenstand der Erfindung ein festes, wachsartiges Kohlenwasserstoffgemisch gemäß Patentanspruch 15.

Weitere Ausführungsformen sind Gegenstand der Unteransprüche oder nachfolgend beschrieben.

Das erfindungsgemäße Verfahren zur Herstellung eines festen, wachsartigen Kohlenwasserstoffgemisches aus Kunststoffabfällen umfasst mindestens die Schritte
a. Destillation eines Pyrolyse-Produkts, auch als Pyrolyseöl bezeichnet, das durch Pyrolyse von Kunststoffabfällen mit hohem Polyolefinanteil erhalten wurde, in einer oder mehreren Stufen bei Temperaturen von 100 °C bis 500 °C unter Vakuum bis Atmosphärendruck, wobei als Fraktionen wenigstens eine Leichtfraktion, die bei weniger als <320°C siedet, und wenigstens eine Pyrolyseöl-Schwerfraktion, die bei >320°C siedet, erhalten werden,
wobei nach der Destillation eine Lösungsmittelextraktion und/oder eine Entparaffinierung erfolgt.

Als Schritt b. kann eine Lösungsmittelextraktion einer der Pyrolyseöl-Schwerfraktionen mit einem Siedepunkt von > 320°C erfolgen in einer Extraktionskolonne mit einem organischen Lösungsmittel, bevorzugt bei Temperaturen von 20°C bis 150 °C, besonders bevorzugt 25°C bis 130 °C und bevorzugt einem Verhältnis von Lösungsmittel zu Pyrolyseöl-Schwerfraktion zu im Bereich von 50% bis 800 %, besonders bevorzugt 60% bis 600% bezogen auf die Masse.

Eine der Pyrolyseöl-Schwerfraktionen aus Schritt a. oder, wenn eine Lösungsmittelextraktion erfolgt, das in der Lösungsmittelextraktion in Schritt b. gewonnen Raffinat wird in einem weiteren Verfahrensschritt entparaffiniert, entweder durch (i) eine Lösungsmittel-Entparaffinierung (englisch: Solvent Dewaxing) mit einem organischen Lösungsmittel ausgewählt aus Ketonen, aromatischen Kohlenwasserstoffen, aliphatischen Kohlenwasserstoffen, halogenierten Kohlenwasserstoffen und Mischungen hiervon oder durch (ii) eine lösungsmittelfreie Entparaffinierung mittels Kristallisation, wobei als Produkt der Entparaffinierung (i) oder (ii) ein festes, wachsartigen Kohlenwasserstoffgemisch und ein Rezykliertes Öl erhalten werden.

Das erhaltene feste, wachsartige Kohlenwasserstoffgemisch ist eine Mischung von überwiegend aliphatischen Kohlenwasserstoffen mit einer Kettenlänge von mehr als 20 Kohlenstoffatomen (C2O). Das feste, wachsartige Kohlenwasserstoffgemisch hat bevorzugt einen geringen Ölgehalt von kleiner als 2 Gew.-%, besonders bevorzugt kleiner als 0,5 Gew.-% Öl, bezogen auf das Kohlenwasserstoffgemisch und einen Benzo[a]pyrene-Gehalt von kleiner als 1 mg/kg gemessen nach DIN EN 16143:2013. Das feste, wachsartige Kohlenwasserstoffgemisch hat bevorzugt eine geringe Nadelpenetration von kleiner 50 mm/10, bevorzugt kleiner 25 mm/10.

Die Abkürzung PAK bezeichnet polyzyklische aromatische Kohlenwasserstoffe, die im englischen "polycyclic aromatic hydrocarbons" heißen.

Unter wachsartig wird ein Material verstanden, dass bei Raumtemperatur ein Feststoff ist. Eine Substanz wird als Wachs bezeichnet, wenn sie bestimmte mechanisch-physikalische Eigenschaften aufweist und insbesondere, wenn sie bei Raumtemperatur knetbar oder fest ist, bei über 40 °C ohne Zersetzung schmilzt und leicht flüssig wenig oberhalb des Schmelzpunktes ist. Das feste, wachsartige Kohlenwasserstoffgemisch ist überwiegend ein Alkangemisch, wobei das Alkangemisch die allgemeine Summenformel CₙH₂ₙ₊₂. hat, mit *n* zwischen 20 und 80.

Die Lösemittelentparaffinierung ist ein wichtiger Schritt im Raffinationsprozess, bei dem paraffinische Wachse aus dem Öl entfernt werden, um die Fließeigenschaften bei niedrigen Temperaturen zu verbessern. Dies führt zu einem niedrigeren Stockpunkt, d.h. Pourpoint des Öls.

Diese Kunststoffabfälle, sogenannte Altkunststoffe, Post-Consumer- oder Post-Industrial-Abfälle, stammen aus Kunststoffprodukten für Verbraucher oder aus der Industrie und werden hauptsächlich aus sechs verschiedenen Polymeren hergestellt, die durch einen Recycling-Code (1 bis 7) gekennzeichnet sind. Das bevorzugte Ausgangsmaterial für die Kunststoffpyrolyse sind sortierte polyolefinische Kunststoffabfälle, die überwiegend Polyethylen und Polypropylen enthalten. Die vorsortierten Kunststoffabfälle werden vor der Pyrolyse gewaschen und zerkleinert oder pelletiert und einer Pyrolyseanlage zugeführt. Es können beliebige Kombinationen von Polyethylen- und Polypropylenabfällen verwendet werden. Für das verwendete Pyrolyseöl werden Kunststoffabfälle pyrolysiert, die überwiegend Polyethylen und Polypropylen umfassen, die gemäß dem Recycling-Code 2, Polyethylen hoher Dichte (HDPE), Recycling-Code 4, Polyethylen niedriger Dichte (LDPE) und Recycling-Code 5, Polypropylen (PP), zugeordnet sind. Kunststoffabfälle, die Polyethylenterephthalat (Recycling-Code 1), Polyvinylchlorid (Recycling-Code 3) und andere Polymere (Recycling-Code 7) enthalten, müssen auf weniger als 5 %, vorzugsweise weniger als 1 % und besonders bevorzugt weniger als 0,1 % aussortiert werden. Polystyrolabfälle (Recycling-Code 6) dürfen nur zu weniger als 30 %, vorzugsweise zu weniger als 20 % und besonders bevorzugt zu weniger als 5 % enthalten sein.

Das Kunststoff-Pyrolyseöl, englisch plastic pyrolisis oil (PPO), wird durch Pyrolyse von Kunststoffabfälle erzeugt. Die Pyrolyse ist ein thermischer Prozess, bei dem der Kunststoffabfall auf hohe Temperaturen von z.B. 450-650 °C ohne Sauerstoff erhitzt wird. Während des Pyrolyse-Prozesses zerfallen die langen Polymerketten des Kunststoffs in kürzere Kohlenwasserstoffe, die abhängig ihrer Kettenlänge sowohl flüssig als auch gasförmig sind. Das Ergebnis ist ein Pyrolyseöl und Nebenprodukte, wie Kohle/Russ und Gase. Die Zusammensetzung des Pyrolyseöls hängt von der Art des Kunststoffabfalls ab, aus dem es stammt. Die Pyrolyse führt zu einer verflüssigung der Kunststoffe.

Ein weiteres Verfahren zur Verflüssigung von Kunststoffen ist die Verölung. Hierfür wird der Kunststoffabfall in einen Reaktor gegeben, wo er bei Temperaturen von etwa 330-400°C unter Ausschluss von Sauerstoff erhitzt wird. Ein spezieller Katalysator, meist ein Zeolith, wird hinzugefügt, um die Umwandlung der langkettigen Polymere in kürzere Kohlenwasserstoffketten zu beschleunigen. Die kürzeren Kohlwasserstoffketten verdampfen und werden kondensiert. Das Ergebnis ist ein Öl. Die Nebenprodukte sind ebenfalls wie bei der Pyrolyse Kohle/Russ und Gase.

Die Hydrothermale Verflüssigung (eng.: hydro thermal liquefaction, kurz: HTL) ist eine weitere beispielhafte Technologie zur Umwandlung von Kunststoffabfällen in ein "synthetisches" Öl. Bei diesem Verfahren werden die Kunststoffe in einen Reaktor gegeben, wo sie unter hohem Druck und bei Temperaturen zwischen 280°C und 400°C verarbeitet werden. In diesem Prozess werden die langen Polymerketten der Kunststoffe aufgespalten oder "gecrackt", wobei oft ein Katalysator zum Einsatz kommt,vor allem z.B.: Wasser im überkritischen Zustand, um die Reaktion zu beschleunigen. Die kürzeren Kohlwasserstoffketten verdampfen, wie bei den vorherigen Technologien, und werden kondensiert. Das Ergebnis ist wieder ein Öl. Die Nebenprodukte sind ebenfalls wie bei der Pyrolyse Kohle/Ruß und Gase.

Erfindungsgemäß wird das Wort "Pyrolyseöl" als Synonym für alle Arten von verflüssigten Kunststoffen in Form von Ölen verwendet, auch solche die z.B. durch Verölung oder hydrothermale Verflüssigung erhalten wurden.

Das Kunststoff-Pyrolyseöl, englisch plastic pyrolisis oil (PPO), wird durch Pyrolyse von Kunststoffabfälle erzeugt.

Das Kunststoffpyrolyse-Produkt wird in einem ersten Verfahrensschritt einer Destillation mit einem oder mehreren Destillationsschritten unterworfen. Die Destillation kann bevorzugt mit zwei Destillationsschritten durchgeführt werden.

Zur Aufreinigung kann in einer Ausführungsform des Verfahrens die hochsieden Pyrolyseöl-Schwerfraktion aus Schritt a. oder ein Pyrolyseöl durch katalytische Hydrierung mit Wasserstoff mit einem Metallkatalysator gereinigt werden, wobei eine gereinigte Pyrolyseöl-Fraktion erhalten wird und die gereinigte Pyrolyseöl-Schwerfraktion in Schritt b. oder c. weiterbehandelt wird oder eine gereinigtes Pyrolyseöl erhalten wird und in Schritt a. weiterbehandelt wird. Die katalytische Hydrierung erfolgt bevorzugt bei Temperaturen von 250 bis 400°C, besonders bevorzugt 290 bis 350 °C, unter Drücken von 30 bis 150 bar, bevorzugt 30 bis 100 bar. Durch die Wasserstoffbehandlung wird ein erheblicher Teil der stickstoffhaltigen, schwefelhaltigen und/oder sauerstoffhaltigen Verunreinigungen entfernt. Durch die Hydrierung werden außerdem Teile der Olefine, Diene und Aromaten gesättigt. Die Hydrierung wird bei Bedingungen durchgeführt, bei denen ein Cracken vermieden wird. Bevorzugt erfolgt die Hydrierung bei Temperaturen im Bereich von bis ca. 330° C, Drücke im Bereich von 70 bis 100 bar und Raumgeschwindigkeiten (LHSV) im Bereich von ca. 0,2 Std.⁻¹ und 5 Std.⁻¹. Als Metallkatalysatoren werden bevorzugt übliche Hydrierungskatalysatoren, wie z.B. die Metalle Nickel, Molybdän, Cobalt, Wolfram und Legierungen dieser Metalle verwendet. Die hydrierte hochsiedende Fraktion kann im weiteren Verfahren genauso wie die hochsiedende Fraktion weiterverarbeitet werden.

Die Lösungsmittelextraktion der hochsiedenden Pyrolyseöl-Schwerfraktion gemäß Schritt b. oder der hydrierten Pyrolyseöl-Schwerfraktion aus a. wird bevorzugt mit einem organischen Lösungsmittel ausgewählt aus Furfural, N-Methyl-2-pyrrolidon (NMP), Dimethylsulfoxid (DMSO), Phenol oder Mischungen hiervon bei Temperaturen von 20°C bis 150 °C, bevorzugt 25-130 °C und mit Lösungsmittel zu Edukt Verhältnis von 50% bis 800%, bevorzugt 60% bis 600% durchgeführt.

Die Entparaffinierung wird bevorzugt als Lösungsmittelmittel-Entparaffinierung durchgeführt. Das Lösungsmittel für die Entparaffinierung ist bevorzugt ausgewählt aus der Gruppe bestehend aus Ketonen, aromatischen Kohlenwasserstoffen, aliphatischen Kohlenwasserstoffen, halogenierten Kohlenwasserstoffen und Mischungen hiervon, bevorzugt ausgewählt aus Aceton, Methylethylketon (MEK), Methylpropylketon, Methylisobutylketon, Toluol, Xylol, Dichlorethan (DCE), Dichlormethan (DCM), Propan, Propylen, Butan, Pentan und Mischungen hiervon, bevorzugt ausgewählt aus einer Mischung von MEK und Toluol, einer Mischung von Dichlormethan und Dichlorethan oder Propan oder Butan.

Wenn die Entparaffinierung als Lösungsmittel-Entparaffinierung durchgeführt wird, beträgt das Verhältnis von Pyrolyseöl-Schwerfraktion bzw. Verhältnis von Raffinat zu Lösungsmittel 1:2 bis 1:12, bevorzugt 1:2 bis 1:10, bezogen auf die Masse des zu entparaffinierenden Edukts.

Die Lösungsmittel-Entparaffinierung wird bevorzugt bei Temperaturen von -30 °C bis 0°C, bevorzugt -25°C bis -5 °C, besonders bevorzug bei -21°C bis -10 °C, durchgeführt.

In einer Ausführungsform wird das feste, wachsartige Kohlenwasserstoffgemisch nach der Entparaffinierung in einem weiteren Verfahrensschritt in einer Lösungsmittel-Entölung durch Extraktion mit einem Lösungsmittel entöl. Das Lösungsmittel ist bevorzugt ausgewählt aus der Gruppe bestehend aus Ketonen, aromatischen Kohlenwasserstoffen, aliphatischen Kohlenwasserstoffen, halogenierten Kohlenwasserstoffen und Mischungen hiervon, bevorzugt ausgewählt aus Aceton, Methylethylketon (MEK), Methylpropylketon, Methylisobutylketon, Toluol, Xylol, Dichlorethan (DCE), Dichlormethan(DCM), Propan, Propylen, Butan, Pentan und Mischungen hiervon, bevorzugt ausgewählt aus einer Mischung von MEK und Toluol, einer Mischung von Dichlormethan und Dichlorethan oder Propan oder Butan.

Die Lösungsmittel-Entölung (englisch: Solvent Deoiling) wird bevorzugt bei Temperaturen von -10 °C bis 15°C, besonders bevorzugt 0°C bis 12 °C durchgeführt. Das Verhältnis von zu entölendem Material zu Lösungsmittel beträgt bevorzugt 1:2 bis 1:12, besonders bevorzugt 1:3 bis 1:10bezogen auf die Masse des zu entölenden Materials.

Als weiteres Produkt wird bei der Entparaffinierung ein Rezykliertes Öl erhalten. Das Rezyklierte Öl ist bevorzugt ein Gemisch aus verzweigten Kohlenwasserstoffketten unterschiedlicher Länge mit einem hohen Viskositätsindex (>120) und einem niedrigen Stockpunkt (<o°C). Das Rezyklierte Öl wird während der Entparaffinierung durch Filtration vom festen, wachsartigen Kohlenwasserstoffgemisch abgetrennt. Das Rezyklierte Öl besteht zu mindestens zu 2 % aus Kohlenstoffatomen aus recycelten Kunstoffen, bevorzugt 5 %, besonders bevorzugt 10 %, weiter bevorzugt 20 %. Als Nebenprodukt wird bei der Entölung ein weiches, wachsartiges Kohlenwasserstoffgemisch erhalten.

Bevorzugt werden als Edukte für das erfindungsgemäße Verfahren ausschließlich Pyrolyseprodukte aus Altkunststoffe eingesetzt. Alternativ können als Edukte des Verfahrens eine Mischung von Pyrolyse-Produkten aus Altkunststoffen mit fossilen Produkten eingesetzt werden, wobei die Mischung zu mindestens 2%, bevorzugt 5 %, besonders bevorzugt 10 % und weiter bevorzugt 20 % aus Altkunststoff-Pyrolyse-Produkten besteht und wobei die fossilen Produkte ausgewählt sind aus schwerem Gasöl (englisch: heavy fuel oil, HFO), atmosphärischem Rückstand, Vakuumgasöl (VGO), Hydrocracker Rückstand (englisch: Unconverted oil, UCO; hydrocracker bottom, HCB) und Mischungen hiervon.

Das erfindungsgemäße Verfahren umfasst somit die folgenden Schritte und Produkte bzw. Zwischenprodukte, die im Verfahren weiterverarbeitet werden:
Destillation --> Pyrolyseöl-Schwerfraktion >320°C Optional: Hydrierung/Hydrotreatment --> gereinigte Pyrolyseöl-Schwerfraktion Destillation --> mehrere (gereinigte) Pyrolyseöl-Schwerfraktionen >320°C Lösungsmittelextraktion --> Raffinat (und Extrakt) der (gereinigten) Pyrolyseöl-Schwerfraktionen Lösungsmittel-Entparaffinierung --> (gereinigtes) festes, wachsartiges Kohlenwasserstoffgemisch und Rezykliertes Öl Lösungsmittel-Entölung --> entöltes (gereinigtes) festes, wachsartiges Kohlenwasserstoffgemisch und weiches, wachsartiges Kohlenwasserstoffgemisch

Die Entparaffinierung und die ggf. anschließende Entölung führen zu einer Verbesserung der Farbe des festen Kohlenwasserstoffgemisches und zu einer Erhöhung der Lagerstabilität.

Bevorzugt besteht das erfindungsgemäße feste, wachsartige Kohlenwasserstoffgemisch zu 2 %, bevorzugt 5 %, besonders bevorzugt 10 % und weiter bevorzugt 20 % aus recycelten Kohlenstoffatomen. Unraffinierte oder nur durch Destillation oder Kondensation hergestellte Wachse aus Kunststoffabfällen können nicht die gleichen Eigenschaften hinsichtlich der Produktqualitäten, wie Farbe, Stabilität und Reinheit bezogen auf den Gehalt an polycyclischen aromatischen Kohlenwasserstoffen erreichen.

Das mit dem erfindungsgemäßen Verfahren hergestellte, feste Kohlenwasserstoffgemisch besitzt einen niedrigen Öl-Anteil und eine niedrige Nadelpenetration. Es ist kennzeichnungsfrei, da es zudem einen niedrigen Gehalt an polyzyklischen aromatischen Kohlenwasserstoffen enthält. Die Eigenschaften sind vergleichbar mit fossilbasierten feste Kohlenwasserstoffgemischen, was eine Unterscheidung auf Grund der physikalischen Parameter erschwert. Eine Unterscheidung erfolgt jedoch auf Basis der Anmeldung bei der Europäische Chemikalienagentur (ECHA) und den Gremien der aktuellen, konventionellen Produktgruppen. Die Unterscheidung der rezyklierten Produkte soll spätestens bei einem Anteil von >20% bezogen auf die Masse in den bisherigen Produkten durch einen neue, eigenen CAS-Nummer (Chemical Abstracts Service Registry Number) erfolgen.

Mit dem erfindungsgemäßen Verfahren werden hochwertige Produkte erzeugt, die wieder als Ausgangsmaterial für die Herstellung hochwertiger Produkte verwendet werden können. Diese können ebenfalls in weiterer Prozessierung erneut hydriert wird, um beispielsweise medizinische Qualität zu erlangen.

Gleichzeitig kann potenziell der Kohlendioxid-Fußabdruck (Carbon Foot Print) reduziert werden, da Kunststoffabfälle wiederverwendet werden und die Verbrennung von Abfällen vermieden wird.

Ein weiterer Vorteil des Verfahrens ist, dass die im Pyrolyseöl enthaltenen Kohlenwasserstoffe nur gereinigt und aufgetrennt werden, nicht aber chemisch verändert werden, da keine Isomerisierung und kein Cracken des gereinigten Pyrolyseöls erfolgt. Hierdurch ist das erfindungsgemäß Verfahren weniger energieintensiv als z.B. Crack-Verfahren.

Gegenstand der Erfindung ist weiterhin ein festes, wachsartiges Kohlenwasserstoffgemisch umfassend eine Mischung von aliphatischen Kohlenwasserstoffen mit einer Kettenlänge von mehr als 20 Kohlenstoffatomen (C2O), wobei das Kohlenwasserstoffgemisch einen geringen Ölgehalt von kleiner als 2 Gew.-%, bevorzugt kleiner als 0,5 Gew.-% Öl bezogen auf das Kohlewasserstoffgemisch aufweist und das Kohlenwasserstoffgemisch einen Benzo[a]pyrene-Gehalt von kleiner als 1 mg/kg gemessen nach DIN EN 16143:2013-05 hat.

Das Kohlenwasserstoffgemisch weist bevorzugt eine Farbzahl von < 0,5 auf gemessen nach ASTM D6045:2020-12 und eine Saybolt-Farbzahl von >15 gemessen nach ASTM D 156:2015-03.

Die Farbzahl zeigt an, ob Raffinierie-Produkte, kontaminiert sind oder durch längere Lagerung beeinträchtigt wurden. Hierfür werden die Saybolt Farbzahl und die ASTM-Farbzahl verwendet (ASTM D156, ASTM D6045). Der Saybolt Farbbereich geht von farblos Sayboltzahl +30 (Klares Wasser / weiß) bis zu -16 (dunkelgelb).

Das Kohlenwasserstoffgemisch ist bevorzugt zu mindestens 2%, bevorzugt 5 %, besonders bevorzugt 10 % und weiter bevorzugt 20 % aus recycelten Kunststoffen erzeugt.

Mit dem beschriebenen Verfahren wird bevorzugt das beschriebene feste, wachsartige Kohlenwasserstoffgemisch erzeugt.

Die festen, wachsartigen Kohlenwasserstoffgemische können beispielsweise als Rohstoff in Kerzen oder Ozonschutzwachsen eingesetzt werden. Die Kohlenwasserstoffgemische können direkt, so wie sie mit dem erfindungsgemäßen Verfahren erzeugt werden, oder nach einer weiteren Aufbereitung z.B. durch Hydrofinishing verwendet werden.

Die Rezyklierten Öle sind Öle, die z.B. als Hydrauliköle oder als Schmiermittel verwendet werden können.

Die Erfindung wird anhand der Figuren beispielhaft erläutert. Es zeigen
- Fig. 1: eine schematische Darstellung der Kunststoffpyrolyse von Altkunststoffen gemäß dem Stand der Technik,
- Fig. 2: eine schematische Darstellung einer Ausführungsform des erfindungsgemäßen Verfah-rens,
- Fig. 3: eine schematische Darstellung einer weiteren Ausführungsform des erfindungsgemäßen Verfahrens mit Hydrierung und
- Fig. 4: eine schematische Darstellung einer weiteren Ausführungsform des erfindungsgemäßen Verfahrens ohne Entölung.
- Fig. 5: eine schematische Darstellung einer weiteren Ausführungsform des erfindungsgemäßen Verfahrens mit Entölung und ohne Extraktion.

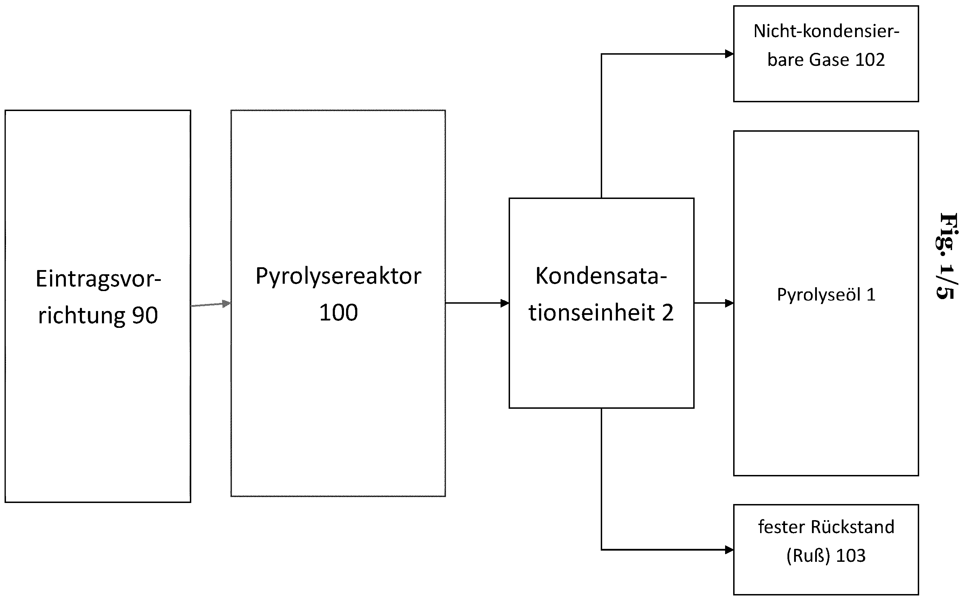

Figur 1 zeigt schematisch den Ablauf einer Kunststoffpyrolyse von Altkunststoffen nach dem Stand der Technik. Über eine Eintragungsvorrichtung 90 werden vorbereitete Kunststoffabfälle in einen Pyrolysereaktor 100 eingetragen. Die Kunststoffabfälle sind möglichst vorsortiert, gewaschen und ggf. zerkleinert oder pelletiert. Im Pyrolysereaktor 100 werden die Kunststoffe unter Ausschluss von Sauerstoff thermisch zersetzt/verdampft. Die Kunststoffpyrolyse-Gase werden kondensiert und gesammelt. Als Nebenprodukte fallen nicht-kondensierbare Gase 102 und ein nicht-verdampfbarere fester Rückstand (Russ) 103 an.

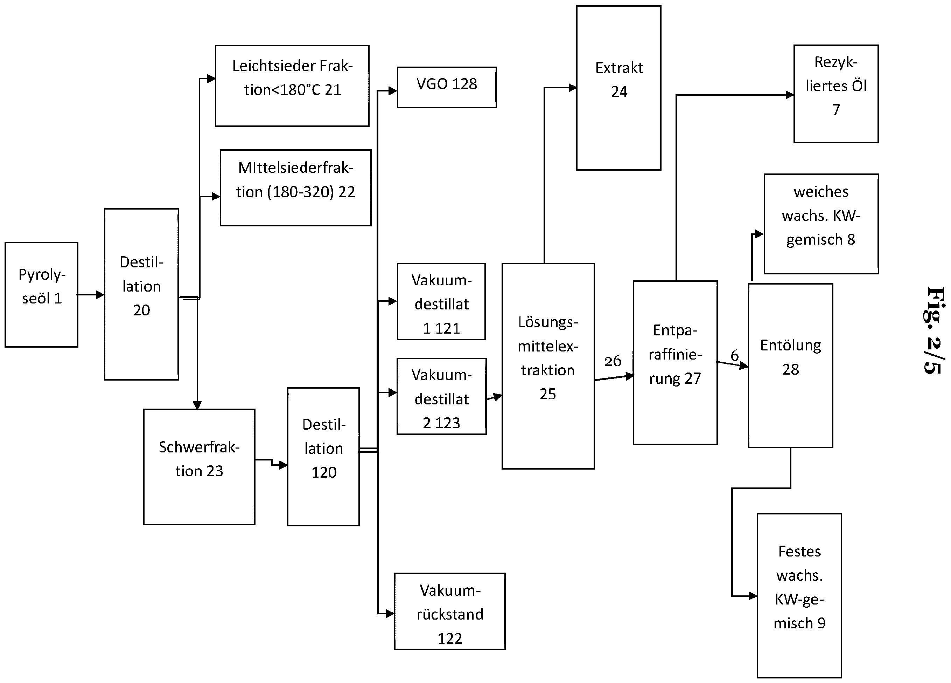

Figur 2 zeigt eine Ausführungsform des erfindungsgemäßen Verfahrens. Ein Pyrolyseöl 1, das z.B. durch ein Verfahren gemäß Figur 1 gewonnen wurde, wird in einer ersten fraktionierten Destillation 20 (unter Atmosphärendruck und Vakuum) im ersten Schritt in drei Fraktionen aufgetrennt. Neben Leichtfraktion <180°C 21 und Mitteldestillatfraktion (180-350°C) 22 entsteht auch eine Schwerfraktion (Pyrolyseöl-Schwerfraktion 23). Diese Pyrolyseöl-Schwerfraktion 23 wird im zweiten Schritt in mindestens vier (Vakuumdestillat-)Schnitte aufgetrennt, darunter eine niedrigsiedende Vakuumgasöl 128 (VGO) Fraktion, zwei mittelsiedende Vakuumdestillat-Fraktion 121, 123 und eine hochsiedende Vakuumrückstandsfraktion 122. Eine der mittelsiedende Vakuumdestillat-Fraktionen 123 wird einer Lösungsmittelextraktion 25 zugeführt. Das Raffinat 26 der Lösungsmittelextraktion 25 wird im nächsten Schritt in einer Lösungsmittel-Entparaffinierung 27 aufbereitet. Bei der Lösungsmittel-Entparaffinierung 27 entstehen eine festes, wachartiges Kohlenwasserstoffgemisch 6 und eine Rezykliertes Öl 7. Das feste, Kohlenwasserstoffgemisch 6 wird in einer Entölung 28 weiter aufgereinigt, in der die Nadelpenetration und der Ölgehalt des Kohlenwasserstoffgemischs weiter reduziert werden. Nach der Entölung wird ein hochreines, festes Kohlenwasserstoffgemisch 9 erhalten, das einen Ölgehalt von weniger als 0,5 % und eine Nadelpenetration <25 mm/10 aufweist. Das bei der Entölung entfernte Nebenprodukt ist ein weiches, wachsartiges Kohlenwasserstoffgemisch 8.

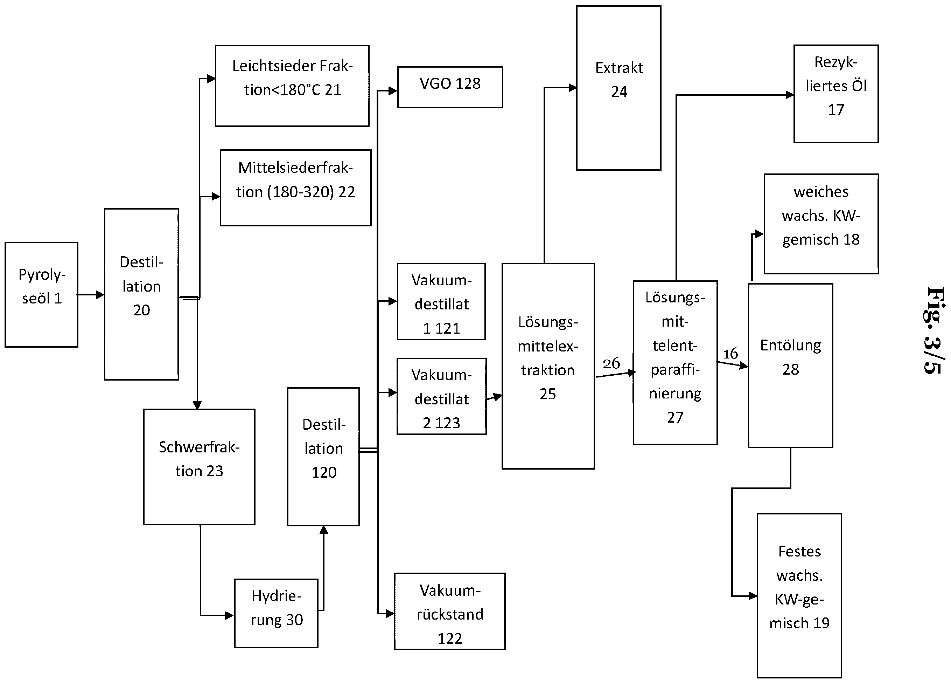

Figur 3 zeigt eine weitere Ausführungsform des erfindungsgemäßen Verfahrens gemäß Figur 2, bei der zusätzlich eine Hydrierung der Pyrolyseöl-Schwerfraktion durchgeführt wird. Das Pyrolyseöl 1 wird zunächst in einer ersten fraktionierten Destillation 25 in mindestens 3 Fraktion aufgetrennt, wie vorstehend beschrieben. Die Pyrolyseöl-Schwerfraktion 23 wird in einer Hydrierung 30 weiter gereinigt. Die hydrierte Pyrolyseöl-Schwerfraktion wird im nächsten Schritt wieder in mindestens vier (Vakuumdestillat-)Schnitte aufgetrennt, darunter eine hydrierte, mittelsiedende Vakuumdestillat-Fraktion 123. Eine der hydrierten, mittelsiedende Vakuumdestillat-Fraktionen 123 wird einer Lösungsmittelextraktion 25 zugeführt wird. Das Raffinat 26 der Lösungsmittelextraktion 25 wird im nächsten Schritt dann wieder in einer Lösungsmittel-Entparaffinierung 27 aufbereitet. Bei der Lösungsmittel-Entparaffinierung 27 entstehen eine festes, wachartiges Kohlenwasserstoffgemisch 16 und ein Rezykliertes Öl 17. Das Kohlenwasserstoffgemisch wird in einer Entölung 28 weiter aufgereinigt. Nach der Entölung wird ein hochreines, festes Kohlenwasserstoffgemisch 19 erhalten, das einen Ölgehalt von weniger als 0,5 % aufweist. Das bei der Entölung entfernte Nebenprodukt ist ein weiches, wachsartiges Kohlenwasserstoffgemisch 18.

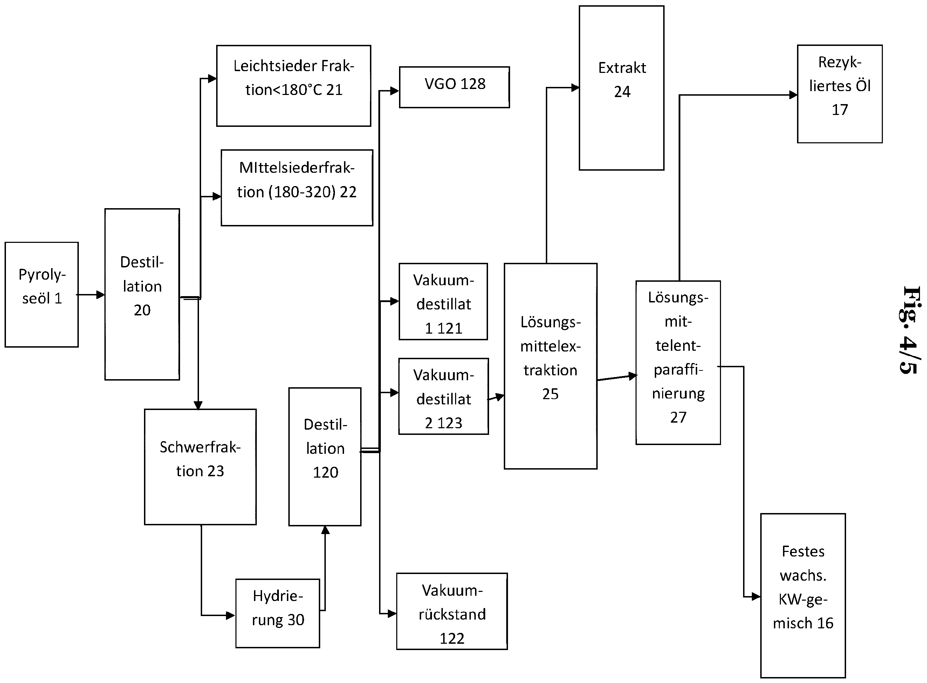

Figur 4 zeigt eine weitere Ausführungsform des erfindungsgemäßen Verfahrens, bei der eine Hydrierung der Edukte, aber keine Entölung durchgeführt wird. Das Pyrolyseöl 1 wird zunächst in einer ersten fraktionierten Destillation 25 in mindestens 3 Fraktion aufgetrennt, wie vorstehend beschrieben. Die Schwerfraktion 23 wird in einer Hydrierung 30 weiter gereinigt und destilliert, bevor die hydrierte Schwerfraktion 123 einer Lösungsmittelextraktion 25 zugeführt wird. Das Raffinat der Lösungsmittelextraktion 25 wird im nächsten Schritt dann wieder in einer Lösungsmittel-Entparaffinierung 27 aufbereitet. Bei der Lösungsmittel-Entparaffinierung 27 entstehen eine festes, wachartiges Kohlenwasserstoffgemisch 16 und ein Rezykliertes Öl 17.

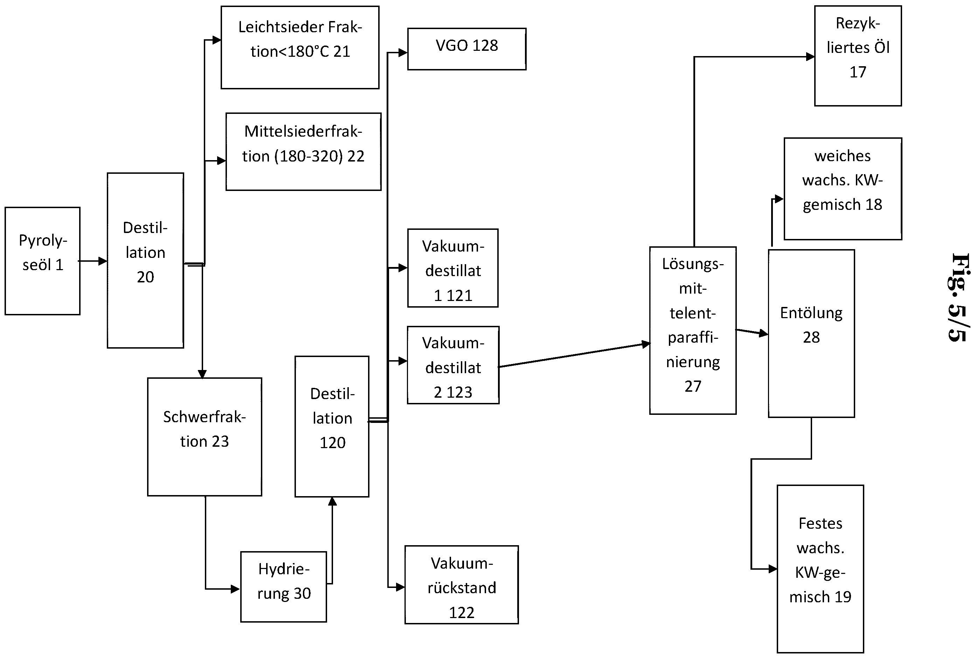

Fig. 5 zeigt eine weitere Ausführungsform des erfindungsgemäßen Verfahrens, bei der keine Extraktion der Schwerfraktion, aber eine Entölung erfolgt. Das Pyrolyseöl 1 wird zunächst wieder in einer ersten fraktionierten Destillation 25 in mindestens 3 Fraktion aufgetrennt, wie vorstehend beschrieben. Die Pyrolyseöl-Schwerfraktion 23 wird in einer Hydrierung 30 weiter gereinigt. Die hydrierte Pyrolyseöl-Schwerfraktion wird im nächsten Schritt wieder in mindestens vier (Vakuumdestillat-)Schnitte aufgetrennt, darunter eine hydrierte, mittelsiedende Vakuumdestillat-Fraktion 123. Eine der hydrierten, mittelsiedende Vakuumdestillat-Fraktionen 123 wird direkt in einer Lösungsmittel-Entparaffinierung 27 weiterverarbeitet. Bei der Lösungsmittel-Entparaffinierung 27 entstehen eine festes, wachartiges Kohlenwasserstoffgemisch und ein Rezykliertes Öl 17. Das Kohlenwasserstoffgemisch wird in einer Entölung 28 weiter aufgereinigt. Nach der Entölung wird ein hochreines, festes Kohlenwasserstoffgemisch 19 erhalten, das einen Ölgehalt von weniger als 0,5 % aufweist. Das bei der Entölung entfernte Nebenprodukt ist ein weiches, wachsartiges Kohlenwasserstoffgemisch 18.

### Beispiele

Es wurden in einem Verfahren mit mehreren Schritten feste, wachsartige Kohlenwasserstoffgemische aus Kunststoff-Pyrolyseöl hergestellt. Hierfür wurden Kunststoff-Pyrolyseöle in verschiedenen Beispielen mit den in Tabelle 1 bis Tabelle 6 angegebenen Parametern umgesetzt.

### Beispiel 1

Die Durchführung von Beispiel 1 und 2 ist angelehnt an Figur 4 und Figure 5.

**Tabelle 1: Parameter der Ausgangstoffe und erhaltenen Zwischenprodukte gemäß Beispiel 1**

| **Produktbezeichnung** | | | **Pyrolyseöl Schwerfraktion PPO1** | **Hydrierte Pyrolyseöl Schwerfraktion** | **Vakuumdestillat ("VD200")** |
|---|---|---|---|---|---|
| **Analyse** | | | | | |
| Dichte 15 °C | [kalk.] | kg/m3 | 841,7 | - | - |
| Kin. Viskosität 40 °C | DIN EN 3104 | mm²/s | 17,0 | - | - |
| Kin. Viskosität 100 °C | DIN EN 3104 | mm²/s | 4,233 | 3,975 | 4,305 |
| Viskositätsindex | DIN ISO 2909 | - | 163 | - | - |
| Farbe ASTM | ASTM D6045 | - | - | 1,7 | - |
| Festpunkt (ASTM) | ASTM D 5985 | °C | 49,6 | - | - |
| Nadelpenetration 25 °C | DIN 51579 | mm/10 | 125 | - | - |
| Erstarrungspunkt | DIN ISO 2207 | °C | 50 | - | - |
| Ölgehalt | DIN 51531 | Mass.- % | 41,56 | - | - |
| iso-Paraffingehalt | | Mass.- % | 71,4 | - | - |
| n-Paraffingehalt | | Mass.- % | 28,4 | - | - |
| Extinktion 275 nm (1 cm) | DAB 8 | - | - | 467,028 | - |
| Extinktion 295 nm (1 cm) | DAB 8 | - | - | 215,599 | - |
| Extinktion >300nm (1 cm) | DAB 8 | - | - | 184,711 | - |
| Simulated Distillation at 5% mass | DIN EN 15199 | °C | 353 | 342 | 393 |
| Simulated Distillation at 95% mass | DIN EN 15199 | °C | 539 | 528 | 489 |
| Benzo[a]pyren | DIN EN 16143 | mg/kg | 39,9 | <0,1 | - |

**Tabelle 2: Parameter der Zwischenprodukte und erhaltenen Produkte gemäß Beispiel 1**

| **Produktbezeichnung** | | | **festes wachsartiges KW-Gemisch ("SW200")** | **festes wachsartiges KW-Gemisch ("FRP60")** | **Rezyklierte Ölkomponente ("SN200")** |
|---|---|---|---|---|---|
| **Analyse** | | | | | |
| Dichte 15 °C | [kalk.] | kg/m3 | - | - | 851,1 |
| Kin. Viskosität 40 °C | DIN EN 3104 | mm²/s | - | - | 22,4 |
| Kin. Viskosität 100 °C | DIN EN 3104 | mm²/s | - | - | 4,665 |
| Viskositätsindex | DIN ISO 2909 | - | - | - | 128 |
| Farbe ASTM | ASTM D6045 | - | 0,1 | 0,1 | 3,6 |
| Farbe Saybolt | ASTM D 156 | - | - | 25 | - |
| Festpunkt (ASTM) | ASTM D 5985 | °C | - | - | -7,5 |
| Nadelpenetration 25 °C | DIN 51579 | mm/10 | - | 14 | - |
| Erstarrungspunkt | DIN ISO 2207 | °C | 57 | 60 | - |
| Ölgehalt | DIN 51531 | Mass.- % | 0,98 | 0,00 | - |
| PAK Ph. Eur. Vaseline weiß | Ph. Eur (Europäisches Arzneibuch) | - | konform | konform | - |
| iso-Paraffingehalt | | Mass.- % | 41,3 | 16,8 | - |
| n-Paraffingehalt | | Mass.- % | 58,6 | 83,2 | - |
| Extinktion 275 nm (1 cm) | DAB 8 | - | 11,828 | 1,863 | 1.018,65 |
| Extinktion 295 nm (1 cm) | DAB 8 | - | 4,189 | 0,579 | 497,991 |
| Extinktion >300nm (1 cm) | DAB 8 | - | 3,563 | 0,501 | 420,869 |
| Simulated Distillation at 5% mass | DIN EN 15199 | °C | 395 | 401 | 389 |
| Simulated Distillation at 95% mass | DIN EN 15199 | °C | 488 | 487 | 483 |
| Benzo[a]pyren | DIN EN 16143 | mg/kg | <0,1 | - | 0,4 |
| Benzo[a]pyren | DIN EN 16143 (basierend) | µg/kg | 2,8 | 0,1 | - |

### Destillation

In einem ersten Schritt wurden Pyrolyseöl zu gleichen Teilen aus Ersatzbrennstoff (EBS - aufgearbeiteter Haushaltsmüll) und einer Mischung von PP/PE Kunststoffen bereitgestellt und einer Destillationsapparatur (Batchkolonne) zugeführt. Es wurde eine Pyrolyseöl-Schwerfraktion mit einem Siedebeginn größer 350°C erhalten gemäß Tabelle 1 ("Pyrolyseöl Schwerfraktion PPO1"), sowie zwei leichte Fraktionen.

### Hydrierung

In einem zweiten Schritt wurde die erhaltene Pyrolyseöl-Schwerfraktion mittels einer HydrierApparatur aufgereinigt unter der Zugabe von Wasserstoff bei einem Druck von 90 bar, einer mittlere Betttemperatur von 310°C und einer LHSV von 0,34, wobei eine gereinigte Pyrolyseöl-Schwerfraktion (Tabelle 1 - "Hydrierte Pyrolyseöl Schwerfraktion") erhalten wurde. Im Anschluss wurde die aufgereinigte Schwer-Pyrolyseöl-Fraktion einer erneuten Destillationsapparatur zugeführt. Unter Vakuum und bis zu einer Temperatur von 300°C wurden vier Schnitte erzeugt, unter anderem der Schnitt gemäß Tabelle 1 (Vakuumdestillat "VD200").

### Entparaffinierung Solvent Dewaxing

Im nächsten Schritt wurde die gewonnene, hochsiedende Fraktion aus der 2. Destillationsstufe (Vakuumdestillat "VD200" - Tabelle 1) in ein Lösungsmittel-Entparaffinierung unter Einsatz des Lösungsmittel Dichlormethan/Dichlorethan (Mischungsverhältnis 50:50) entparaffiniert. Die Entparaffinierung wurde bei einer Temperatur von -17°C und einem Lösungsmittel zu Edukt-Verhältnis von 1:7 durchgeführt. Das erhaltene Produkt ist ein festes, wachsartiges Kohlenwasserstoffgemisch (Tabelle 2) und ein Rezykliertes Öl (Tabelle 2).

Das Produkt hat einen niedriger Nadelpenetration, einen geringen Gehalt an Benzo[a]pyren und eine geringere Farbe im Vergleich zum Ausgangsprodukt (Pyrolyseöl Schwerfraktion PPOi, Tabelle 1).

### Entölung Solvent Deoiling

In einem letzten Schritt wurde das wachsartige Kohlenwasserstoffgemisch einer Entölung zugeführt. Bei einem Lösungsmittel zu Edukt Verhältnis von 1:7 und einer Temperatur von +8°C wurde ein festes, wachsartiges Kohlenwasserstoffgemisch (Tabelle 2) und ein weiches, wachsartiges Kohlenwasserstoffgemisch erhalten.

Das Produkt hat eine niedrigere Nadelpenetration und einem geringen Gehalt an Benzo[a]pyren als das wachsartiges Kohlenwasserstoffgemisch nach der Entparaffinierung aus Beispiel 2.

### Beispiel 2 - Alternative mit Extraktion und ohne Entölung

**Tabelle 3: Parameter der Zwischenprodukte und erhaltenen Produkte gemäß Beispiel 2**

| **Produktbezeichnung** | | | **Raffinat ("SR200")** | **festes wachsartiges KW-Gemisch ("SW200")** | **Rezykliertes Öl ("SN200")** |
|---|---|---|---|---|---|
| **Analyse** | | | | | |
| Dichte 15 °C | [kalk.] | kg/m3 | - | - | 843,0 |
| Kin. Viskosität 40 °C | DIN EN 3104 | mm2/s | - | - | 21,5 |
| Kin. Viskosität 100 °C | DIN EN 3104 | mm2/s | 4,299 | - | 4,604 |
| Viskositätsindex | DIN ISO 2909 | - | - | - | 134 |
| Farbe ASTM | ASTM D6045 | - | - | 0,1 | 0,4 |
| Festpunkt (ASTM) | ASTM D 5985 | °C | - | - | -8,5 |
| Nadelpenetration 25 °C | DIN 51579 | mm/10 | - | 40 | - |
| Erstarrungspunkt | DIN ISO 2207 | °C | - | 57 | - |
| Ölgehalt | DIN 51531 | Mass.-% | - | 0,97 | - |
| PAK Ph.Eur. Vaseline weiß | Ph. Eur (Europäisches Arzneibuch) | - | - | konform | - |
| iso-Paraffingehalt | | Mass.-% | - | 42,2 | - |
| n-Paraffingehalt | | Mass.-% | - | 57,8 | - |
| Extinktion 275 nm (1 cm) | DAB 8 | - | - | 5,54 | 179,98 |
| Extinktion 295 nm (1 cm) | DAB 8 | - | - | 1,000 | 62,75 |
| Extinktion >300nm (1 cm) | DAB 8 | - | - | 0,873 | 52,67 |
| Simulated Distillation at 5% mass | DIN EN 15199 | °C | 393 | 399 | 392 |
| Simulated Distillation at 95% mass | DIN EN 15199 | °C | 487 | 488 | 485 |
| Benzo[a]pyren | DIN EN 16143 | mg/kg | | <0,1 | <0,1 |
| Benzo[a]pyren | DIN EN 16143 (basierend) | µg/kg | - | 0,3 | - |

### Destillation

In einem ersten Schritt wurde eine Destillation wie in Beispiel 1 durchgeführt und eine Pyrolyseöl-Schwerfraktion gemäß Tabelle 1 ("Pyrolyseöl Schwerfraktion PPO1"), sowie zwei leichte Fraktionen erhalten.

### Hydrierung

In einem zweiten Schritt wurde die erhaltene Pyrolyseöl-Schwerfraktion mittels einer Hydrierung wie in Beispiel 1 aufgereinigt, wobei unter anderem der Schnitt gemäß Tabelle 1 (Vakuumdestillat "VD200") erzeugt wurde.

### Lösungsmittelextraktion

Im nächsten Schritt wurde die gewonnene, hochsiedende Fraktion aus der 2. Destillationsstufe (Vakuumdestillat VD200 - Tabelle 1) in eine zehnstufige Labor-Extraktion gegeben. Diese wurde bei einer Temperatur von 48°C betrieben. Als Lösungsmittel wurde Furfural verwendet. Hierbei wurde ein kennzeichnungsfreies Raffinat hergestellt und ein Extrakt.

Es wurde ein Furfuralverhältnis von 100 Gew.-% angesetzt. Es wurde ein Raffinat mit den in Tabelle 3 genannten Parametern erhalten. Die Ergebnisse sind in Tabelle 3 als "SR200" Raffinat benannt.

### Entparaffinierung Solvent Dewaxing

Im nächsten Schritt wurde das aus der Lösemittelextraktion gewonnene Raffinat (SR200 - Tabelle 3) in ein Lösungsmittel-Entparaffinierung unter Einsatz des Lösungsmittel Dichlormethan/Dichlorethan (Mischungsverhältnis 50:50) entparaffiniert. Die Entparaffinierung wurde bei einer Temperatur von -17°C und einem Lösungsmittel zu Eduktverhältnis von 1:7 durchgeführt. Das erhaltene Produkt ist ein, wachsartiges Kohlenwasserstoffgemisch (Tabelle 3) und ein Rezykliertes Öl (Tabelle 3).

Das Produkt hat einen niedriger Nadelpenetration, einen geringen Gehalt an Benzo[a]pyren und eine geringere Farbe im Vergleich zum Ausgangsprodukt (Pyrolyseöl Schwerfraktion PPOi, Tabelle 1).

### Beispiel 3

**Tabelle 4: Parameter der Ausgangstoffe und erhaltenen Produkte gemäß Beispiel 3**

| **Produktbezeichnung** | | | **Pyrolyseöl Schwerfraktion PPO2** | **Vakuumdestillat ("VD200")** | **festes, wachsartiges KW-Gemisch ("SW200")** | **Rezykliertes Öl ("SN200")** |
|---|---|---|---|---|---|---|
| | | | | | | |
| **Analyse** | | | | | | |
| Dichte 15 °C | [kalk.] | kg/m3 | 831,9 | - | - | |
| Kin. Viskosität 40 °C | DIN EN 3104 | mm²/s | 15,7 | - | - | 20,7 |
| Kin. Viskosität 100 °C | DIN EN 3104 | mm²/s | 4,096 | - | - | 4,432 |
| Viskositätsindex | DIN ISO 2909 | - | 173,6 | - | - | 126,9 |
| Farbe ASTM | ASTM D6045 | - | >8 | - | - | 8 |
| Farbe Saybolt | ASTM D 156 | - | | - | - | - |
| Festpunkt (ASTM) | ASTM D 5985 | °C | 44 | - | - | -5,4 |
| Nadelpenetration 25 °C | DIN 51579 | mm/10 | 100 | - | - | - |
| Erstarrungspunkt | DIN ISO 2207 | °C | 49 | - | 56 | - |
| Ölgehalt | DIN 51531 | Mass.- % | 34,68 | - | 1,28 | - |
| iso-Paraffingehalt | | Mass.- % | 67 | - | 38,7 | - |
| n-Paraffingehalt | | Mass.- % | 33 | - | 61,2 | - |
| Extinktion 275 nm (1 cm) | DAB 8 | - | | - | - | 2.336,50 |
| Extinktion 295 nm (1 cm) | DAB 8 | - | | - | - | 1.460,91 |
| Extinktion >300nm (1 cm) | DAB 8 | - | | - | - | 1.275,88 |
| Simulated Distillation at 5% mass | DIN EN 15199 | °C | 381, | - | 395, | 390, |
| Simulated Distillation at 95% mass | DIN EN 15199 | °C | 502, | - | 486, | 483, |
| Benzo[a]pyren | DIN EN 16143 | mg/kg | 23,2 | 28,4 | 0,5 | 61,1 |

In Beispiel 3 wurde eine Pyrolyseöl aus einer Mischung aus PE und PP Kunststoffen destillativ in ein Pyrolyseöl Schwerfraktion gemäß Tabelle 4 ("Pyrolyseöl Schwerfraktion PPO2"), und mindestens eine Leichtfraktion aufgetrennt. In einem weiteren Schritt wurde die Pyrolyseöl Schwerfraktion einer 2. Destillation zugeführt und ein Vakuumdestillat gemäß Tabelle 5 (Vakuumdestillat ("VD200")) erhalten. In einem letzten Schritt wurde das Vakuumdestillat einer Entparaffinierung zugeführt. Bei einem Lösungsmittel zu Edukt Verhältnis von 1:7 und einer Temperatur von -17°C wurde ein festes, wachsartiges Kohlenwasserstoffgemisch (festes, wachsartiges KW-Gemisch ("SW200")) und ein Rezykliertes Öl (Rezykliertes Öl ("SN200")) erhalten gemäß Tabelle 4. Das feste, wachsartige Kohlenwasserstoffgemisch hat eine niedrigere Nadelpenetration und einen niedrigen Benzo(a)pyren Gehalt als das Ausgangsmaterial (Pyrolyseöl Schwerfraktion).

### Beispiel 4

Die Durchführung von Beispiel 4 ist angelehnt an Figur 3.

**Tabelle 5: Parameter der Ausgangstoffe und erhaltenen Produkte gemäß Beispiel 4**

| **Produktbezeichnung** | | | **Pyrolyseöl Schwerfraktion PPO2** | **Raffinate ("SR200")** | **festes, wachsartiges KW-Gemisch ("SW200")** | **Rezykliertes Öl ("SN200")** |
|---|---|---|---|---|---|---|
| **Analyse** | | | | | | |
| Dichte 15 °C | [kalk.] | kg/m3 | 831,9 | - | - | 837,4 |
| Kin. Viskosität 40 °C | DIN EN 3104 | mm²/s | 15,7 | - | - | 18,8 |
| Kin. Viskosität 100 °C | DIN EN 3104 | mm²/s | 4,096 | - | - | 4,262 |
| Viskositätsindex | DIN ISO 2909 | - | 173,6 | - | - | 135,8 |
| Farbe ASTM | ASTM D6045 | - | >8 | - | 0,4 | 1,5 |
| Festpunkt (ASTM) | ASTM D 5985 | °C | 44 | - | - | -4,2 |
| Nadelpenetration 25 °C | DIN 51579 | mm/10 | 100 | - | 41 | - |
| Erstarrungspunkt | DIN ISO 2207 | °C | 49 | - | 56 | - |
| Ölgehalt | DIN 51531 | Mass.- % | 34,68 | - | 1,46 | - |
| iso-Paraffingehalt | | Mass.- % | 67 | - | 35,3 | - |
| n-Paraffingehalt | | Mass.- % | 33 | - | 64,7 | - |
| Simulated Distillation at 5% mass | DIN EN 15199 | °C | 381, | - | 392, | 390, |
| Simulated Distillation at 95% mass | DIN EN 15199 | °C | 502, | - | 486, | 485, |
| Benzo[a]pyren | DIN EN 16143 | mg/kg | 23,2 | 0,1 | | - |
| Benzo[a]pyren | DIN EN 16143 (basierend) | µg/kg | | - | 0,5 | 19,4 |

In Beispiel 4 wurde eine Pyrolyseöl aus einer Mischung aus PE und PP Kunststoffen destillativ in ein Pyrolyseöl-Schwerfraktion gemäß Tabelle 5 ("Pyrolyseöl Schwerfraktion PPO2"), und mindestens eine Leichtfraktion aufgetrennt. In einem nächsten Schritt wurde unter anderem ein Vakuumdestillatschnitt erzeugt vergleichbar zu Beispiel 3. Dieser Vakuumdestillatschnitt wurde einer Lösemittelextraktion bei 48 °C und einem Lösemittelverhältnis von 100% bezogen auf das Edukt zugeführt. Das erhaltene Raffinat (Tabelle 5 - Raffinat "SR200") wurde in einem letzten Schritt einer Lösemittel-Entparaffinierung bei -17 °C und einem Lösemittelverhältnis von 1:7 bezogen auf das Edukt zugeführt und ein rezykliertes Öl und ein festes, wachsartiges Kohlenwasserstoffgemisch erhalten nach Tabelle 5. Das feste, wachsartige Kohlenwasserstoffgemisch hat eine niedrigere Nadelpenetration als das Ausgangsmaterial (Pyrolyseöl Schwerfraktion) und eine geringere Farbe.

### Prüfmethoden

1. Dichte
2. Die Dichte wurde bei 15 °C mit einem Schwingungsmessgeräte bestimmt nach DIN EN ISO 12185:2011 unter Zuhilfenahme der DIN 51757 V3 Kinematische Viskosität
   Die kinematische Viskosität wurde bei 40 °C und 100 °C gemessen unter Verwendung eines Ubbelohde Viskosimeter gemäß DIN EN 3104:2024.
3. Der Viskositätsindex wurde berechnet gemäß DIN ISO 2909:2004 auf Basis der kinematischen Viskositäten bei 40 °C und 100 °C.
4. Farbzahl
   Die Farbzahl nach ASTM wurde gemäß ASTM D6045:2020 bestimmt mit Hilfe eines Lovibond Farbmessgeräts. Die Schichtdicke der Küvette betrug 33mm. Des Weiteren wurde eine Fabe nach Saybolt gemäß ASTM D 156:2015 bestimmt mit Hilfe eines Lovibond Farbmessgeräts. Die Schichtdicke der Küvette betrug 10mm.
5. Festpunkt
   Der Festpunkt wurde gemäß ASTM D 5985:2002 bestimmt.
6. Nadelpenetration bei 25 °C
   Die Nadelpenetration wurde gemäß DIN 51579:2010 bei 25°C bestimmt und beschreibt die Eindringtiefe eines Messkörpers in das Prüfmedium.
7. Erstarrungspunkt
   Der Erstarrungspunkt wurde gemäß DIN ISO 2207:1983 bestimmt.
8. Ölgehalt
   Der Ölgehalt wurde gemäß DIN 51531:2023 für Mineralöl Paraffin bestimmt. Es ist der Anteil, der sich im Lösemittel (MEK) löst.
9. Paraffinanteil
   Der n und iso-Paraffin Gehalt wurde basierend auf einer simulierten Destillation durch eine Gaschromatograph nach DIN 15199:2021 errechnet. Die Berechnung erfolgt anhand des Chromatogramms mit einer internen Auswertematrix.
10. Extinktion
   Die Extinktion wurde gemäß DAB 8:1978 Reinheitsuntersuchung bestimmt. Dazu wird eine Küvette mit icm Schichtdicke verwendet und das Prüfmedium mit drei verschiedenen Wellenlängen beschickt, 275 nm, 295 nm, >300nm.
11. Benzo[a]pyren
   Der Gehalt an polyzyklisch-aromatischen Kohlenwasserstoffen, im speziellen der Benzo[a]pyrene Gehalt, wurde gemäß DIN EN 16143:2013 bestimmt.

### Bezugszeichenliste

| | |
|---|---|
| Pyrolyseöl | 1 |
| Kondensationseinheit | 2 |
| festes, wachartiges Kohlenwasserstoffgemisch | 6 |
| Rezykliertes Öl | 7 |
| Weiches, wachsartiges Kohlenwasserstoffgemisch | 8 |
| hochreines, festes Kohlenwasserstoffgemisch | 9 |
| Rezykliertes Öl | 11 |
| festes, wachartiges Kohlenwasserstoffgemisch | 16 |
| Rezykliertes Öl | 17 |
| Weiches, wachsartiges Kohlenwasserstoffgemisch | 18 |
| hochreines, festes Kohlenwasserstoffgemisch | 19 |
| Fraktionierte Destillation | 20 |
| niedrigsiedende Fraktion | 21 |
| mittelsiedende Fraktion | 22 |
| hochsiedende Fraktion | 23 |
| Extrakt | 24 |
| Lösungsmittelextraktion | 25 |
| Raffinat | 26 |
| Lösungsmittel-Entparaffinierung | 27 |
| Entölung | 28 |
| Hydrierung | 30 |
| Eintragungsvorrichtung | 90 |
| Pyrolysereaktor | 100 |
| Gas | 102 |
| Kohle/Ruß | 103 |
| Rezykliertes Öl | 111 |
| Vakuumdestillation | 120 |
| Vakuumdestillat 1 | 121 |
| Vakuumrückstand | 122 |
| gereinigte hochsiedende Fraktion | 123 |
| Raffinat | 126 |
| Vakuumgasöl (VGO) | 128 |

## Patentansprüche

1. Verfahren zur Herstellung eines festen, wachsartigen Kohlenwasserstoffgemisches aus Kunststoffabfällen umfassend mindestens die Schritte
a. Destillation eines Pyrolyse-Produkts, das durch Pyrolyse von Kunststoffabfällen mit hohem Polyolefinanteil erhalten wurde, in einem oder mehreren Schritten bei Temperaturen von 100 °C bis 500 °C unter Vakuum oder Atmosphärendruck, wobei als Fraktionen wenigstens eine Leichtfraktion, die bei weniger als 320°C siedet, und wenigstens eine Pyrolyseöl-Schwerfraktion, die bei mehr als 320°C siedet, erhalten werden,
**dadurch gekennzeichnet, dass**
nach der Destillation eine Lösungsmittelextraktion und/oder eine Entparaffinierung erfolgt, wobei
b. die Lösungsmittelextraktion einer der Pyrolyseöl-Schwerfraktionen in einer Extraktionskolonne erfolgt mit einem organischen Lösungsmittel, und/oder
c. das Raffinat der Lösungsmittelextraktion aus Schritt b. oder eine der Pyrolyseöl-Schwerfraktionen aus a. entparaffiniert wird (i) durch eine Lösungsmittel-Entparaffinierung mit einem organischen Lösungsmittel ausgewählt aus Ketonen, aromatischen Kohlenwasserstoffen, aliphatischen Kohlenwasserstoffen, halogenierten Kohlenwasserstoffen und Mischungen hiervon, oder (ii) durch eine lösungsmittelfreie Entparaffinierung mittels Kristallisation, wobei als Produkt der Entparaffinierung (i) oder (ii) ein festes wachsartiges Kohlenwasserstoffgemisch und ein Rezykliertes Öl erhalten werden und
wobei das erhaltene feste, wachsartige Kohlenwasserstoffgemisch eine Mischung von überwiegend aliphatischen Kohlenwasserstoffen mit einer Kettenlänge von mehr als 20 Kohlenstoffatomen ist und das Kohlenwasserstoffgemisch einen Benzo[a]pyren-Gehalt von kleiner als 1 mg/kg gemessen nach DIN EN 16143:2013 hat.

2. Verfahren gemäß Anspruch 1, **dadurch gekennzeichnet, dass** nach der Lösungsmittelextraktion in Schritt b die Lösungsmittel-Entparaffinierung in Schritt c erfolgt.

3. Verfahren gemäß Anspruch 1 oder 2, **dadurch gekennzeichnet, dass** ein Pyrolyseöl oder die Pyrolyseöl-Schwerfraktion aus Schritt a. durch katalytische Hydrierung mit Wasserstoff mit einem Metallkatalysator gereinigt wird, wobei eine gereinigte Pyrolyseöl-Schwerfraktion erhalten wird und die gereinigte Pyrolyseöl-Schwerfraktion in Schritt b. oder c. weiterbehandelt wird oder eine gereinigtes Pyrolyseöl erhalten wird und in Schritt a. weiterbehandelt wird.

4. Verfahren gemäß Anspruch 3, **dadurch gekennzeichnet, dass** die katalytische Hydrierung bei Temperaturen von 250 bis 400°C, bevorzugt 290 bis 350 °C unter Drücken von 30 bis 150 bar gereinigt wird, bevorzugt 30 bis 100 bar.

5. Verfahren gemäß einem der vorhergehenden Ansprüche, **dadurch gekennzeichnet, dass** das feste, wachsartige Kohlenwasserstoffgemisch nach der Entparaffinierung in einem weiteren Verfahrensschritt entölt wird durch eine Lösungsmittel-Entölung mit einem organischen Lösungsmittel ausgewählt aus Ketonen, aromatischen Kohlenwasserstoffen, aliphatischen Kohlenwasserstoffen, halogenierten Kohlenwasserstoffen und Mischungen hiervon, bevorzugt ausgewählt aus Aceton, Methylethylketon (MEK), Methylpropylketon, Methylisobutylketon, Toluol, Xylol, Dichlorethan (DCE), Dichlormethan (DCM), Propan, Propylen, Butan, Pentan und Mischungen hiervon, bevorzugt ausgewählt aus, einer Mischung von MEK und Toluol, einer Mischung von Dichlormethan und Dichlorethan oder Propan oder Butan, bevorzugt mit einem Verhältnis von festem, wachsartigem Kohlenwasserstoffgemisch zu Lösungsmittel von 1:2 bis 1:12 bezogen auf die Masse und bevorzugt bei Temperaturen von -10 °C bis 15°C, wobei als Produkt der Entölung ein festes, wachsartigen Kohlenwasserstoffgemisch mit eine Nadelpenetration kleiner 25 mm/10 gemessen nach DIN 51579:2010-03 und ein weiches, wachsartiges Kohlenwasserstoffgemisch erhalten werden.

6. Verfahren gemäß einem der vorgehenden Ansprüche, **dadurch gekennzeichnet, dass** die Entparaffinierung als Lösungsmittel-Entparaffinierung ausgeführt wird und das Lösungsmittel ausgewählt ist aus der Gruppe bestehend aus Ketonen, aromatischen Kohlenwasserstoffen, aliphatischen Kohlenwasserstoffen, halogenierten Kohlenwasserstoffen und Mischungen hiervon, bevorzugt ausgewählt aus Aceton, Methylethylketon (MEK), Methylpropylketon, Methylisobutylketon, Toluol, Xylol, Dichlorethan (DCE), Dichlormethan (DCM), Propan, Propylen, Butan, Pentan und Mischungen hiervon, bevorzugt ausgewählt aus, einer Mischung von MEK und Toluol, einer Mischung von Dichlormethan und Dichlorethan oder Propan oder Butan.

7. Verfahren gemäß einem der vorgehenden Ansprüche, **dadurch gekennzeichnet, dass** die Entparaffinierung als Lösungsmittel-Entparaffinierung ausgeführt wird und dass bei der Entparaffinierung als Nebenprodukt ein Rezykliertes Öl erhalten wird, das einen hohen Viskositätsindex von größer als 120 bestimmt nach DIN ISO 2909:2004-06 und einem niedrigen Stockpunkt von kleiner als 0 °C bestimmt nach ASTM D 5985:2002-02 aufweist, wobei das Rezykliertes Öl durch Filtration des festen, wachsartigen Kohlenwasserstoffgemisch erhalten wird.

8. Verfahren gemäß einem der vorgehenden Ansprüche, **dadurch gekennzeichnet, dass** die Entparaffinierung als Lösungsmittel-Entparaffinierung durchgeführt wird mit einem Verhältnis von Raffinat oder Pyrolyseöl-Schwerfraktion zu Lösungsmittel von 1:2 bis 1:12 bezogen auf die Masse, bevorzugt mit einem Verhältnis von 1:2 bis 1:10 bezogen auf die Masse des zu entparaffinierenden Edukts.

9. Verfahren gemäß einem der vorgehenden Ansprüche, **dadurch gekennzeichnet, dass** die Entparaffinierung als Lösungsmittel-Entparaffinierung durchgeführt wird bei Temperaturen von -30°C bis 0°C, bevorzugt -25°C bis -5 °C.

10. Verfahren gemäß einem der vorgehenden Ansprüche, **dadurch gekennzeichnet, dass** die Lösungsmittelextraktion der Pyrolyseöl-Schwerfraktionen bei Temperaturen von 20°C bis 150 °C, bevorzugt 25 °C bis 130 °C°C, und einem Verhältnis von Lösungsmittel zu Pyrolyseöl Schwerfraktion im Bereich von 50 % bis 800 % bezogen auf die Masse, bevorzugt 60 % bis 600 %, erfolgt.

11. Verfahren gemäß einem der vorgehenden Ansprüche, **dadurch gekennzeichnet, dass** die Lösungsmittelextraktion der Pyrolyseöl Schwerfraktion mit einem organischen Lösungsmittel ausgewählt aus Furfural, N-Methyl-2-pyrrolidon, Dimethylsulfoxid, Phenol, Heptan oder Mischungen hiervon durchgeführt wird.

12. Verfahren gemäß einem der vorgehenden Ansprüche, **dadurch gekennzeichnet, dass** das feste, wachsartige Kohlenwasserstoffgemisch eine geringe Nadelpenetration kleiner 50 mm/10, bevorzugt kleiner 25 mm/10 gemessen nach DIN 51579:2010-03 besitzt.

13. Verfahren gemäß einem der vorgehenden Ansprüche, **dadurch gekennzeichnet, dass** als Edukt für das Verfahren in Schritt a. ausschließlich Pyrolyseöl-Produkt aus Altkunststoffen eingesetzt wird.

14. Verfahren gemäß einem der Ansprüche 1 bis 13, **dadurch gekennzeichnet, dass** als Edukte des Verfahrens eine Mischung von Pyrolyseöl-Produkt aus Altkunststoffen mit fossilen Produkten eingesetzt wird, wobei die Mischung zu mindestens 2%, bevorzugt mindestens 5 %, besonders bevorzugt 10%, weiter bevorzugt 20 % aus Pyrolyseöl aus Altkunststoffen besteht und wobei die fossilen Produkte ausgewählt sind aus schwerem Gasöl, atmosphärischem Rückstand, Vakuumgasöl, Hydrocracker Rückständen und Mischungen hiervon.

15. Festes, wachsartiges Kohlenwasserstoffgemisch umfassend eine Mischung von aliphatischen Kohlenwasserstoffen mit einer Kettenlänge von mehr als 20 Kohlenstoffatomen, wobei das Kohlenwasserstoffgemisch eine geringe Nadelpenetration kleiner 50 mm/10, bevorzugt kleiner 25 mm/10 gemessen nach DIN 51579:2010-03 aufweist, das Kohlenwasserstoffgemisch einen Benzo[a]pyrene-Gehalt von kleiner als 1 mg/kg gemessen nach DIN EN 16143:2013-05 hat und das Kohlenwasserstoffgemisch zu mindestens 2%, aus Pyrolyseöl aus Altkunststoffen besteht.

16. Kohlenwasserstoffgemisch gemäß Anspruch 15, **dadurch gekennzeichnet, dass** das Kohlenwasserstoffgemisch eine Farbezahl von < 0,5 aufweist gemessen nach ASTM D6045:2020-12.

17. Kohlenwasserstoffgemisch gemäß Anspruch 15 oder 16, **dadurch gekennzeichnet, dass** das Kohlenwasserstoffgemisch zu mindestens 5%, bevorzugt zu 10%, besonders bevorzugt zu 20% aus recycelten Kunststoffen erzeugt ist.

18. Kohlenwasserstoffgemisch gemäß einem der Ansprüche 15 bis 17, **dadurch gekennzeichnet, dass** das Kohlenwasserstoffgemisch einen Ölgehalt von kleiner als 2 Gew.-%, bevorzugt kleiner als 0,5 Gew.-% Öl bezogen auf das Kohlenwasserstoffgemisch bestimmt gemäß DIN 51531:2023 hat.

19. Festes, wachsartiges Kohlenwasserstoffgemisch gemäß einem der Ansprüche 15 bis 18 , wobei das Kohlenwasserstoffgemisch mit einem Verfahren gemäß einem der Ansprüche 1 bis 14 hergestellt worden ist.
